# EUROPÄISCHE PATENTSCHRIFT

(11) **EP 1 423 306 B1**
(45) Veröffentlichungstag und Bekanntmachung des Hinweises auf die Patenterteilung: **15.06.2005**
(21) Anmeldenummer: 02760218.4
(22) Anmeldetag: 03.07.2002
(51) Int. Cl.: B64C 13/04, G05G 9/04

(54) **STEUERKNÜPPEL**
JOYSTICK
LEVIER DE COMMANDE

(30) Priorität: 07.09.2001 DE 10144146
(43) Veröffentlichungstag der Anmeldung: 02.06.2004
(73) Patentinhaber: Wittenstein AG, 97999 Igersheim (DE)
(72) Erfinder: HENLE, Jörg, 97922 Deubach (DE)
(74) Vertreter: Weiss, Peter, Dr.
(86) Internationale Anmeldenummer: PCT/EP2002/007316
(87) Internationale Veröffentlichungsnummer: WO 2003/022679

(56) Entgegenhaltungen:
- GB-A- 2 148 460
- US-A- 3 043 539
- US-A- 3 209 612
- US-A- 4 947 070

## Beschreibung

Die vorliegende Erfindung betrifft einen Steuerknüppel mit einer linearen und relativen Bewegungsachse zur Steuerung von Fahrzeugen aller Art, insbesondere von Flugzeugen oder Simulatoren, mit einer, gegenüber einer Grundplatte, linear und rotativ bewegbaren Steuerstange.

Derartige Steuerknüppel sind in vielfältiger Form und Ausführung auf dem Markt bekannt und erhältlich. Sie dienen zum Steuern von unterschiedlichen Fahrzeugen, insbesondere zum Steuern von Flugzeugen aber auch zur Steuerung von Simulatoren, insbesondere Flugsimulatoren.

Nachteilig bei den herkömmlichen Steuerknüppeln ist, dass diese einem gewissen Verschleiss unterliegen, schwer zu betätigen und aufwendig hergestellt sind.

Die GB 2 148 460 A offenbart eine Kontrollvorrichtung für Sidesticks. Bei dieser Kontrollvorrichtung wird eine Schwenkbewegung eines Sidesticks in eine rotative Bewegung ausgehend von einer Welle über ein Zahnteilkreis auf eine zweite parallel dazu angeordnete Welle übertragen, an welche Positionssensoren anschliessen, welche die Position des Steuerknüppels bzw. Sidesticks aufnehmen.

Die US 3,209,612 beschriebt eine Kontrolleinrichtung, zum Betätigen des Höhenruders, wobei eine lineare Bewegung in eine rotative Bewegung mittels eines Teilkreises übertragen wird.

Der vorliegenden Erfindung liegt daher die Aufgabe zugrunde, einen Steuerknüppel der eingangs genannten Art zu schaffen, welcher die genannten Nachteile beseitigt, und mit welchem sehr präzise eine Steuerung und/oder Regelung von Fahrzeugen, insbesondere von Flugzeugen oder eine Steuerungs- und/oder.Regelungssimulation möglich ist.

Zudem soll das Gewicht, der Einbauraum, die Herstellungskosten verringert und die Präzision der Steuerung verbessert werden.

Zur Lösung dieser Aufgabe führt, dass an die Steuerstange (1) einends ein linear gegenüber der Grundplatte (3) bewegbares Steuerelement (7) anschliesst und die in einer gemeinsamen Achse (M) liegende Steuerstange (1) mit einem in der Achse (M) liegenden Antriebselement (12.2), insbesondere Elektromotor und/oder Getriebeelement (13.2) in Verbindung steht.

Bei der vorliegenden Erfindung lässt sich ein Steuerelement linear gegenüber der Grundplatte oder zumindest eines Führungselementes bewegen. In das Steuerelement greift die Steuerstange ein und steht mit einem Getriebeelement und/oder Antriebselement in Eingriff, Antriebselement und/oder Getriebeelement können einerseits die rotative Bewegung direkt aufnehmen, oder aktiv vom Antriebselement angetrieben bzw. gesteuert werden, bspw. für Autopiloten- oder Simulationsbetrieb oder Getriebe.

Hierdurch ist exakt die Position des tatsächlichen Betriebszustandes des Fahrzeuges, insbesondere des Flugzeuges für den Piloten erkennbar.

Zudem ist von Vorteil bei der vorliegenden Erfindung, dass das Steuerelement über die Führungselemente zwischen einem Halteelement und Grundplatte linear hin- und herbewegbar ist. Entsprechende passgenau, hochpräzise Führungen, gewährleisten, dass eine exakte lineare Führung des Steuerelementes bzw. der Steuerstange gewährleistet bleibt, wobei das Antriebselement und/oder Getriebeelement, welche mit der Steuerstange verbunden sind, linear mitbewegt werden.

Vorzugsweise zwischen Grundplatte und Halteelement ist ein Spindelelement drehbar gelagert, welches über eine dem Steuerelement zugeordnete Antriebshülse beim linearen Bewegen das Spindelelement rotativ antreibt. Hierdurch wird eine lineare Bewegung des Steuerelementes umgesetzt bzw. übertragen auf eine rotative Drehbewegung des Spindelelementes. Endseits des Spindelelementes, vorzugsweise im Bereich des Halteelementes schliesst an dieses zumindest ein Antriebselement und/oder Getriebeelement an bzw. steht mit diesen in Eingriff. Hierdurch kann je nach Anzahl der Umdrehungen genau ermittelt werden, in welcher linearen Position sich der Steuerknüppel bzw. die Steuerstange befindet.

Durch eine aktive Ansteuerung von Getriebeelement und/oder Antriebselement lässt sich dann das Spindelelement antreiben und entsprechend die Steuerstange bzw. dessen Griffelement linear hin- und herbewegen. Durch die Kupplung beider Antriebselemente linear und rotativ, lässt sich der Steuerknüppel linear und/oder rotativ aktiv, aber auch passiv steuern und regeln. Dies ist bei der vorliegenden Erfindung von besonderer Bedeutung. Hierdurch lässt sich der Steuerknüppel sehr universell einsetzen.

Ein weiterer Vorteil ist, dass dieser Steuerknüppel mit einer linearen und rotativen Bewegungsachse sehr reibungsarm und nahezu spielfrei arbeitet, da auch Antriebselemente, insbesondere Elektromotoren verwendet werden, die nahezu versatzfrei arbeiten. Bevorzugt sitzt jedem Antriebselement ein Wegmesssystem auf, um eine rotative Bewegung des Antriebselementes, der Steuerstange und/oder des Spindelelementes exakt aufzunehmen und als Signal weiter zu verarbeiten.

Es hat sich ferner als vorteilhaft erwiesen, dem Steuerelement und/oder dem Griffelement zumindest ein Kraft- und/oder Drehmomentsensor zuzuordnen, um die manuellen Kräfte zu ermitteln oder entsprechend bei der Simulation bestimmbare Gegenkräfte bzw. rotative und lineare Gegenbewegungen über die Antriebselemente aktiv zu erzeugen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf einen erfindungsgemässen Steuerknüppel mit einer linearen und einer rotativen Bewegungsachse;
Figur 2 eine schematisch dargestellte Seitenansicht auf den Steuerknüppel gemäss Figur 1 in einer Ruhelage;
Figur 3 eine schematisch dargestellte Draufsicht auf den Steuerknüppel gemäss den Figuren 1 und 2 in einer möglichen Gebrauchslage.

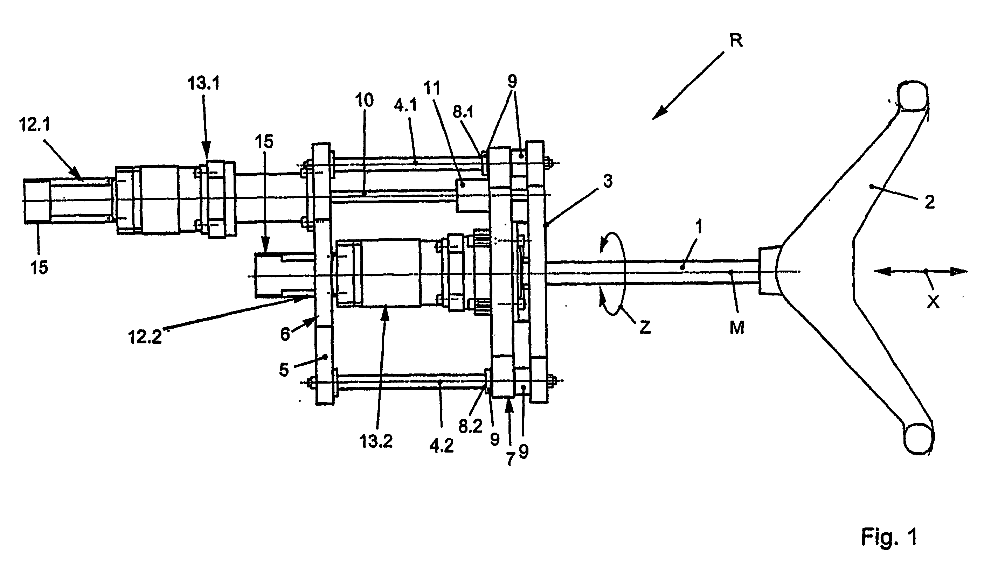

Gemäss Figur 1 weist ein erfindungsgemässer Steuerknüppel R zur Steuerung von Fahrzeugen aller Art, insbesondere zur Steuerung von Flugzeugen oder Simulatoren eine Steuerstange 1 auf, an welche endseits ein Griffelement 2, Steuerknüppel od. dgl. anschliesst. Das Griffelement 2 wird von Fingern einer menschlichen Hand bedient und lässt die Steuerstange 1 entlang einer Mittelachse M linear in dargestellter Doppelpfeilrichtung als Bewegungsachse X hin- und herbewegen. Dabei durchgreift die Steuerstange 1 eine Grundplatte 3.

An die Grundplatte 3 schliessen seitliche Führungselemente 4.1, 4.2 an, die endseits ein Halteelement 5, als Halteplatte aufnehmen. Das Halteelement 5 ist mittig mit einer Öffnung 6 versehen.

Wichtig bei der vorliegenden Erfindung ist, dass zwischen Grundplatte 3 und Halteelement 5 ein Steuerelement 7 vorgesehen ist, welches mit entsprechenden, passenden Führungen 8.1, 8.2 versehen ist, durch welche die Führungselemente 4.1, 4.2 greifen. Die Führungen 8.1, 8.2 sind passgenau zu den Führungselementen 4.1, 4.2 ausgelegt bzw. bestimmt. Hierdurch lässt sich das Steuerelement 7 in dargestellter Bewegungsrichtung zwischen Grundplatte 3 und Halteelement 5 linear hin- und herbewegen.

Das Steuerelement 7 kann beiderseits, vorzugsweise im Bereich der Führungen 8.1, 8.2 mit zumindest einem Abstandselement 9 versehen sein, welches einerseits als Anschlag dient oder andererseits, sollte dieses aus elastischem Material ausgebildet sein, als Dämpfungselement oder zur Dämpfung des Anschlages vorgesehen sein kann. Das Abstandselement 9 kann jedoch auch Bestandteil von Grundplatte 3 oder Halteelement 5 sein.

Wichtig bei der vorliegenden Erfindung ist ferner, dass vorzugsweise zwischen Grundplatte 3 und Halteelement 5 ein Spindelelement 10 drehbar gelagert und parallel zur Mittelachse M versetzt angeordnet ist, welches mittels einer entsprechenden Hülse 11, die dem Steuerelement 7 fest zugeordnet ist, drehbar angetrieben wird, wenn sich die Hülse 11 linear in dargestellter Bewegungsrichtung X bewegt. Hierdurch wird eine lineare Bewegung des Steuerelementes 7 auf eine rotative Bewegung des Spindelelementes 10 übertragen. Endseits des Spindelelementes 10, insbesondere im Bereich des Halteelementes 5 ist ein Antriebselement und/oder Getriebeelement 12.1/13.1 wiederlösbar mit dem Halteelement 5 verbunden und steht mit dem Spindelelement 10 in Eingriff.

Ferner ist wichtig bei der vorliegenden Erfindung, dass ebenfalls ein weiteres Antriebselement und/oder Getriebeelement 12.2/13.2 dem Steuerelement 7 zugeordnet ist/sind, welches bzw. welche mit der Steuerstange 1 in Eingriff, insbesondere in Verbindung stehen.

Diese können eine rotatorische Bewegung um die Mittelache M in dargestellter Bewegungsrichtung Z aufnehmen und/oder weiterverarbeiten und/oder aktiv bewegen/steuern und regeln.

Wichtig ist ferner, dass durch die Öffnung 6 im Halteelement 5 das Antriebs- und/oder Getriebeelement 12.2/13.3, welche mit dem Steuerelement 7 verbunden sind, beim linearen Bewegen der Steuerstange 1 durch die Öffnung 6 des Halteelementes 5 bewegbar sind.

Durch den parallelen Versatz zwischen Mittelachse M und dem Spindelelement 10 bzw. durch den parallelen Versatz von Antriebselement und/oder Getriebeelements 12.1/13.1 zu den Antriebselementen bzw. Getriebeelementen 12.2/13.2 lässt sich Antriebselement 12.2 bzw. Getriebeelement 13.2 linear vorbei an dem Spindelelement 10 mit anschliessendem Antriebselement und/oder Getriebeelement 12.1, 13.1 linear in Bewegungsrichtung X hin- und herbewegen.

Wichtig ist ferner, dass das Steuerelement 7 lediglich durch die Führungen 8.1, 8.2 und die Führungselemente 4.1, 4.2 eine lineare Bewegung zulassen, wobei nur eine rotative Bewegung der Steuerstange 1 um die Bewegungsrichtung Z auf Antriebselement und/oder Getriebeelement 12.2/13.2 übertragen oder eine aktive rotative regelbare, steuerbare Bewegung von Antriebselement und/oder Getriebeelement 12.2/13.3 auf die Steuerstange übertragbar ist.

Eine weitere Besonderheit der vorliegenden Erfindung ist ferner, dass durch lineares Bewegen der Steuerstange 1 das Steuerelement 7 linear bewegbar ist und hierdurch das Spindelelement 10 rotativ antreibbar ist. Dieses wiederum überträgt die rotative Bewegung auf das Antriebselement 12.1 und/oder Getriebeelement 13.1.

Hierdurch lässt sich einerseits exakt eine Steuerung regeln und deren Parameter bestimmen.

Zudem kann durch bspw. aktives Betätigen des Antriebselement eine lineare gesteuerte und regelbare Bewegung der Steuerstange 1 bzw. des Griffelementes 2 erfolgen.

Ferner ist von Vorteil bei der vorliegenden Erfindung, dass bspw. bei Autopilotensteuerung oder im Simulatorbetrieb aktiv sich Antriebselement 12.1 und/oder Getriebeelement 13.1 antreiben lassen, die dann die Spindel 10 rotativ antreiben, um das Steuerelement 7, und damit die Steuerstange 1 bzw. das Griffelement 2 linear hin- und herzubewegen. Auf diese Weise erkennt der Pilot sofort in welchem Betriebszustand sich sein Fahrzeug, insbesondere sein Flugzeug befindet.

Auch die relative Bewegung des Griffelementes 2 um die Bewegungsrichtung Z, d. h. um die Mittelachse M, kann aktiv und/oder passiv in oben beschriebener Weise betrieben werden, indem Antriebselement 12.2 und/oder Getriebeelement 13.2 passiv durch rotatives Bewegen der Steuerstange 1 mitbewegbar sind oder aktiv durch Getriebeelement 13.2 und/oder Antriebselement 12.2 antreibbar sind.

Im Anschluss an die Antriebselemente 12.1, 12.2 schliesst vorzugsweise jeweils zumindest ein Wegmesssystem 15 an, welches die rotative Bewegung des Spindelelementes 10 und/oder die rotative Bewegung der Steuerstange 1 in verarbeitbare Signale umwandelt.
Diese können einerseits zur passiven Steuerung eines Rechners bspw. als Sicherheitssignal zur zusätzlichen Überwachung des Betriebszustandes dienen.

Zudem können diese Signale dazu dienen, bspw. bei Stromausfall und durch manuelle Betätigung der Steuerstange 1 bzw. der Grundplatte 3 entsprechende anschliessende Elemente, Motoren, Leitwerke, Triebwerke etc. zu steuern.

Dabei ist von Vorteil, das durch eine hohe Steigung des Spindelelementes diese nicht selbsthemend ausgebildet ist, und jeder Zeit auch bei Stromausfall sich manuell Grundplatte 3 bzw. die Steuerstange 1 in Bewegungsrichtung X hin und her bewegen lassen. Dadurch, dass keine Selbsthemmung des Spindelelementes 10 erfolgt, ist der Steuerknüppel R sehr betriebssicher, auch bspw. bei Stromausfall, so dass dann immer noch die entsprechenden Signale über die Wegmesssysteme 15, die den Antriebselementen 12.1, 12.2 aufsitzen, generiert oder gegebenenfalls weiterverarbeitet werden können. Dies trägt erheblich zur Sicherheit eines derartigen Steuerknüppels bei.

Dabei hat sich ferner als besonders vorteilhaft erwiesen als Antriebselemente 12.1/12.2 Elektromotoren zu verwenden, die nahezu versatzfrei und reibungsarm arbeiten.

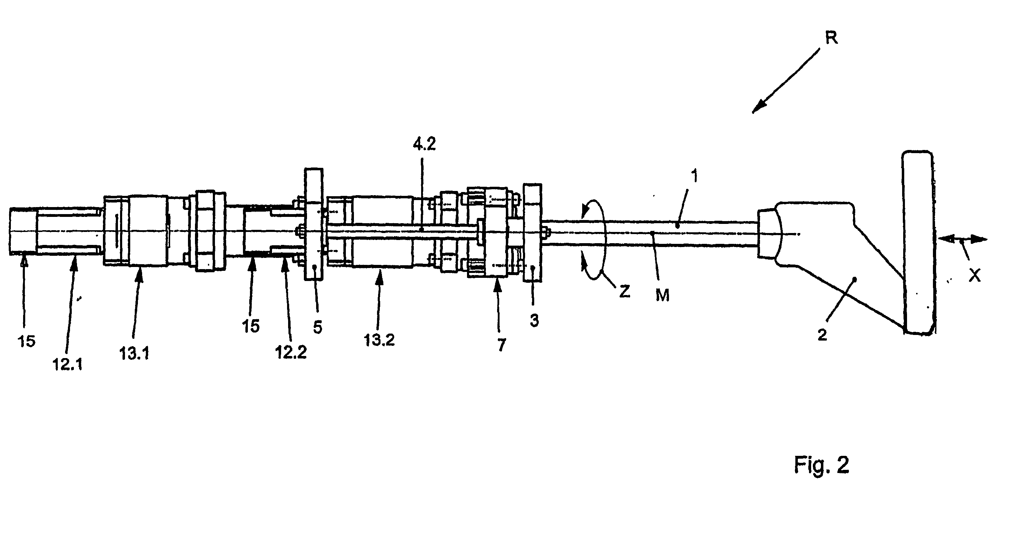

Aus Figur 2 geht hervor, dass der Steuerknüppel R sehr flach, klein und kompakt ausgebildet werden kann, wodurch sein Einbaugewicht, insbesondere seine Einbaugrösse erheblich reduziert werden kann. Dies ist unter Umständen auch zurückzuführen auf die parallele Anordnung von Antriebs- und oder Getriebeelement 12.2/13.2 zum Spindelelement 10.

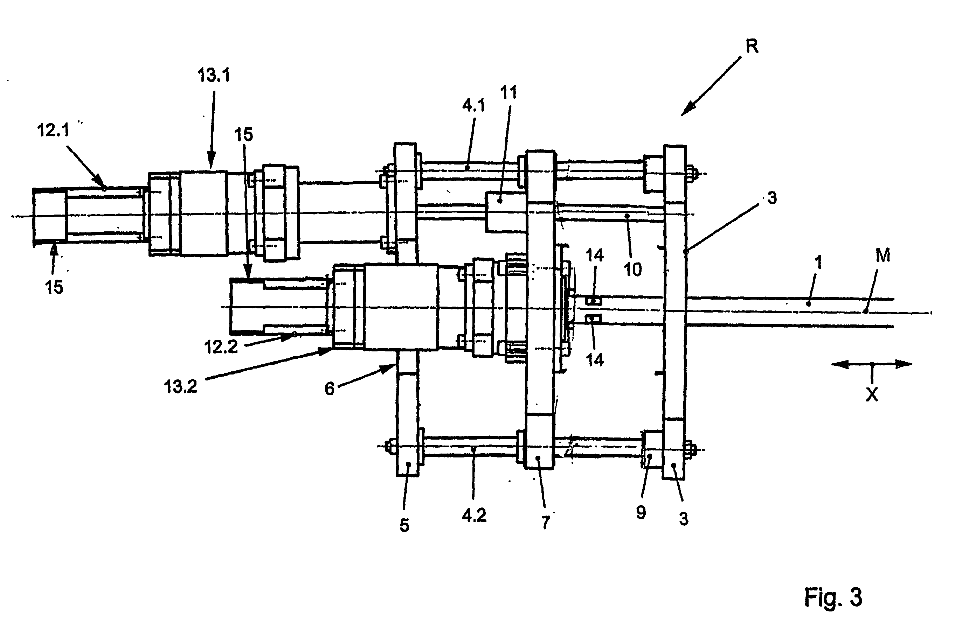

In dem Ausführungsbeispiel gemäss Figur 3 ist als Draufsicht auf den Steuerknüppel R eine mögliche Gebrauchslage aufgezeigt, in welcher erkennbar ist, dass das Steuerelement 7 linear gegen das Halteelement 5 bewegbar ist. Dabei durchgreift das Antriebselement 12.2 und/oder Getriebeelement 13.2 die Öffnung 6 des Halteelementes 5.

Als vorteilhaft hat sich auch erwiesen, der Steuerstange 1 zumindest einen Kraft- und oder Drehmomentensensor 14 zuzuordnen, um die externe Kraft bzw. das externe Drehmoment, welches auf die Steuerstange 1 über das Griffelement 2 eingeleitet wird, exakt zu bestimmen und zu messen. Hierdurch kann dann Einfluss über die aktive Ansteuerung der Antriebselemente und/oder Getriebeelemente 12.1, 12.2 bzw. 13.1, 13.2 auf die Steuerstange 1 genommen werden.

### Positionszahlenliste

| | | | | | |
|---|---|---|---|---|---|
| 1 | Steuerstange | 34 | | 67 | |
| 2 | Griffelement | 35 | | 68 | |
| 3 | Grundplatte | 36 | | 69 | |
| 4 | Führungselement | 37 | | 70 | |
| 5 | Halteelement | 38 | | 71 | |
| 6 | Öffnung | 39 | | 72 | |
| 7 | Steuerelement | 40 | | 73 | |
| 8 | Führungen | 41 | | 74 | |
| 9 | Abstandselement | 42 | | 75 | |
| 10 | Spindelelement | 43 | | 76 | |
| 11 | Hülse | 44 | | 77 | |
| 12 | Antriebselement | 45 | | 78 | |
| 13 | Getriebeelement | 46 | | 79 | |
| 14 | Kraft- oder Drehmomentsensor | 47 | | | |
| 15 | Wegmesssystem | 48 | | | |
| 16 | | 49 | | | |
| 17 | | 50 | | | |
| 18 | | 51 | | | |
| 19 | | 52 | | | |
| 20 | | 53 | | R | Steuerknüppel |
| 21 | | 54 | | | |
| 22 | | 55 | | M | Mittelachse |
| 23 | | 56 | | | |
| 24 | | 57 | | X | Bewegungsrichtung |
| 25 | | 58 | | Z | Bewegungsrichtung |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Steuerknüppel mit einer linearen und relativen Bewegungsachse zur Steuerung von Fahrzeugen aller Art, insbesondere von Flugzeugen oder Simulatoren, mit einer, gegenüber einer Grundplatte (3), linear und rotativ bewegbaren Steuerstange (1),
**dadurch gekennzeichnet,**
**dass** an die Steuerstange (1) einends ein linear gegenüber der Grundplatte (3) bewegbares Steuerelement (7) anschliesst und die in einer gemeinsamen Achse (M) liegende Steuerstange (1) mit einem in der Achse (M) liegenden Antriebselement (12.2), insbesondere Elektromotor und/oder Getriebeelement (13.2) in Verbindung steht.

2. Steuerknüppel nach Anspruch 1, **dadurch gekennzeichnet, dass** an die Grundplatte (3) zumindest ein Führungselement (4) zum linearen Führen des Steuerelementes (7) anschliesst und endseits an dem Führungselement (4) ein Halteelement (5) vorgesehen ist.

3. Steuerknüppel nach Anspruch 2, **dadurch gekennzeichnet, dass** das Steuerelement (7) entlang dem zumindest einen Führungselement (4.1, 4.2) zwischen Grundplatte (3) und Halteelement (5) linear bewegbar geführt ist.

4. Steuerknüppel nach wenigstens einem der Ansprüche 1 bis 3, **dadurch gekennzeichnet, dass** das Steuerelement (7) mit zumindest einem Spindelelement (10) in Eingriff steht und dieses zumindest eine Spindelelement (10) beim linearen Bewegen antreibt bzw. kämmt.

5. Steuerknüppel nach Anspruch 4, **dadurch gekennzeichnet, dass** das zumindest eine Spindelelement (10) in der Grundplatte (4) und/oder im Halteelement (5) drehbar gelagert ist.

6. Steuerknüppel nach Anspruch 4 oder 5, **dadurch gekennzeichnet, dass** das Spindelelement (10) mit einem Antriebselement (12.1), insbesondere einem elektrischen Motor und/oder Getriebeelement (13.1) in Verbindung steht.

7. Steuerknüppel nach Anspruch 6, **dadurch gekennzeichnet, dass** das Antriebselement (12.1) und/oder das Getriebeelement (13.1) an das Halteelement (5) wiederlösbar festgelegt sind und mit dem Spindelelement (10) in Eingriff stehen.

8. Steuerknüppel nach wenigstens einem der Ansprüche 4 bis 7, **dadurch gekennzeichnet, dass** eine lineare Bewegung des Steuerelementes (7) rotativ auf das zumindest eine Spindelelement (10) übertragbar, und die rotative Bewegung des Spindelelementes (10) über ein Getriebe- und/oder ein Antriebselement (12.1, 13.1) übertragbar sind oder eine ansteuerbare, regelbare Bewegung des Antriebselementes (12.1) aktiv auf das Spindelelement (10) mit ggf. zwischengeschalteten Getriebeelement (13.1) übertragbar ist.

9. Steuerknüppel nach wenigstens einem der Ansprüche 1 bis 8, **dadurch gekennzeichnet, dass** die Steuerstange (1) dem Steuerelement (7) wiederlösbar zugeordnet sind.

10. Steuerknüppel nach Anspruch 9, **dadurch gekennzeichnet, dass** eine rotative Bewegung der Steuerstange (1) auf das Antriebselement (12.2) und/oder das Getriebeelement (13.2) übertragbar ist oder eine ansteuerbare, regelbare aktive rotative Bewegung des Getriebeelementes (13.2) und/oder des Antriebselementes (12.2) auf die Steuerstange (1) übertragbar sind.

11. Steuerknüppel nach Anspruch 9 oder 10, **dadurch gekennzeichnet, dass** das Antriebselement (12.2) und/oder Getriebeelement (13.2) mit dem Steuerelement (7) verbunden sind und durch lineares Verfahren des Steuerelementes (7) gegenüber dem Halteelement (5) durch eine Öffnung (6) oder Ausnehmung im Halteelement (5) linear bewegbar sind.

12. Steuerknüppel nach wenigstens einem der Ansprüche 1 bis 11, **dadurch gekennzeichnet, dass** der Steuerstange (1) und/oder einem Griffelement (2) zumindest ein Kraft- und/oder Drehmomentsensor (14) zugeordnet ist.

13. Steuerknüppel nach wenigstens einem der Ansprüche 9 bis 12, **dadurch gekennzeichnet, dass** die Antriebselemente (12.1, 12.2) aktiv antreibbar und/oder passiv, ggf. auch zur Bestimmung der Position und Lage der Steuerstange (1) betreibbar sind.

14. Steuerknüppel nach wenigstens einem der Ansprüche 9 bis 13, **dadurch gekennzeichnet, dass** jedem Antriebselement (12.1, 12.2) und/oder Getriebeelement (13.1, 13.2) zumindest ein Wegmesssystem (15) zugeordnet ist, welches eine mechanische Bewegung in auswertbare Signale umsetzt.

15. Steuerknüppel nach wenigstens einem der Ansprüche 6 bis 14, **dadurch gekennzeichnet, dass** das Spindelelement (10) manuell über die Grundplatte (3) bewegbar, nicht selbsthemmend und spielfrei mittels der Grundplatte (3) und/oder mit zumindest einem Antriebselement (12.1) antreibbar ist.

## Claims

1. Joystick, having a linear and rotational axis of movement for controlling vehicles of all types, more especially aeroplanes or simulators, said joystick having a control rod (1) which is linearly and rotationally displaceable relative to a base plate (3), **characterised in that** a control element (7), which is linearly movable relative to the base plate (3), communicates with the control rod (1) at one end, and the control rod (1), which lies in a common axis (M), is connected to a driving element (12.2), more especially an electromotor and/or transmission element (13.2), which lies in the axis (M).

2. Joystick according to claim 1, **characterised in that** at least one guide element (4), for the linear guidance of the control element (7), communicates with the base plate (3), and a retaining element (5) is provided terminally on the guide element (4).

3. Joystick according to claim 2, **characterised in that** the control element (7) is guided in a linearly movable manner along the at least one guide element (4.1, 4.2) between base plate (3) and retaining element (5).

4. Joystick according to at least one of claims 1 to 3, **characterised in that** the control element (7) engages with at least one spindle element (10), and said control element drives, or respectively meshes with, at least one spindle element (10) during the linear movement.

5. Joystick according to claim 4, **characterised in that** the at least one spindle element (10) is rotatably mounted in the base plate (4) and/or in the retaining element (5).

6. Joystick according to claim 4 or 5, **characterised in that** the spindle element (10) is connected to a driving element (12.1), more especially an electric motor and/or transmission element (13.1).

7. Joystick according to claim 6, **characterised in that** the driving element (12.1) and/or the transmission element (13.1) are/is re-releasably secured on the retaining element (5) and engage/engages with the spindle element (10).

8. Joystick according to at least one of claims 4 to 7, **characterised in that** a linear movement of the control element (7) is rotationally transmittable to the at least one spindle element (10), and the rotational movement of the spindle element (10) is transmittable via a transmission element (13.1) and/or a driving element (12.1), or an actuatable, adjustable movement of the driving element (12.1) is actively transmittable to the spindle element (10) with a possibly interposed transmission element (13.1).

9. Joystick according to at least one of claims 1 to 8, **characterised in that** the control rod (1) is re-releasably associated with the control element (7).

10. Joystick according to claim 9, **characterised in that** a rotational movement of the control rod (1) is transmittable to the driving element (12.2) and/or the transmission element (13.2), or an actuatable, adjustable, active rotational movement of the transmission element (13.2) and/or of the driving element (12.2) is transmittable to the control rod (1).

11. Joystick according to claim 9 or 10, **characterised in that** the driving element (12.2) and/or transmission element (13.2) are/is connected to the control element (7) and are/is linearly movable through an opening (6) or recess in the retaining element (5) by a linear displacement of the control element (7) relative to the retaining element (5).

12. Joystick according to at least one of claims 1 to 11, **characterised in that** at least one force and/or torque sensor (14) is associated with the control rod (1) and/or a gripping element (2).

13. Joystick according to at least one of claims 9 to 12, **characterised in that** the driving elements (12.1, 12.2) are actively drivable and/or passively operable, possibly also for determining the position and location of the control rod (1).

14. Joystick according to at least one of claims 9 to 13, **characterised in that** each driving element (12.1, 12.2) and/or transmission element (13.1, 13.2) has associated therewith at least one path measuring system (15) which converts a mechanical movement into evaluatable signals.

15. Joystick according to at least one of claims 6 to 14, **characterised in that** the spindle element (10) is manually movable via the base plate (3), is not self-locking and free from play by means of the base plate (3) and/or is drivable with at least one driving element (12.1).

## Revendications

1. Levier de commande à axe de déplacement linéaire et rotatif, destiné à la commande de véhicules de tous types, en particulier d'avions ou de simulateurs, avec une barre de commande (1) pouvant être déplacée de manière linéaire et rotative par rapport à une plaque de base (3),
**caractérisé par le fait**
**qu'**à la barre de commande (1) vient se raccorder, à une extrémité, un élément de commande (7) pouvant être déplacé par rapport à la plaque de base (3) et que la barre de commande (1) située sur un axe commun (M) est en communication avec un élément d'entraînement (12.2), en particulier un moteur électrique et/ou un élément d'engrenage (13.2), situé sur l'axe commun (M).

2. Levier de commande selon la revendication 1, **caractérisé par le fait qu'**à la plaque de base (3) vient se raccorder au moins un élément de guidage (4) destiné à guider linéairement l'élément de commande (7) et qu'il est prévu, à l'extrémité de l'élément de guidage (4), un élément de retenue (5).

3. Levier de commande selon la revendication 2, **caractérisé par le fait que** l'élément de commande (7) est guidé de manière déplaçable linéairement le long de l'au moins un élément de guidage (4.1, 4.2) entre la plaque de base (3) et l'élément de retenue (5).

4. Levier de commande selon au moins l'une des revendications 1 à 3, **caractérisé par le fait que** l'élément de commande (7) vient en prise avec au moins un élément de broche (10) et qu'il entraîne ou peigne au moins un élément de broche (10) lors du déplacement linéaire.

5. Levier de commande selon la revendication 4, **caractérisé par le fait que** l'au moins un élément de broche (10) est monté rotatif dans la plaque de base (4) et/ou dans l'élément de retenue (5).

6. Levier de commande selon la revendication 4 ou 5, **caractérisé par le fait que** l'élément de broche (10) est en communication avec un élément d'entraînement (12.1), en particulier un moteur électrique et/ou un élément d'engrenage (13.1).

7. Levier de commande selon la revendication 6, **caractérisé par le fait que** l'élément d'entraînement (12.1) et/ou l'élément d'engrenage (13.1) sont fixés de manière amovible à l'élément de retenue (5) et viennent en prise avec l'élément de broche (10).

8. Levier de commande selon au moins l'une des revendications 4 à 7, **caractérisé par le fait qu'**un déplacement linéaire de l'élément de commande (7) peut être transmis de manière rotative sur l'au moins un élément de broche (10) et que le mouvement de rotation de l'élément de broche (10) peut être transmis par l'intermédiaire d'un élément d'engrenage et/ou un élément d'entraînement (12.1, 13.1) ou qu'un déplacement activable et réglable de l'élément d'entraînement (12.1) peut être transmis de manière active à l'élément de broche (10), éventuellement à élément d'engrenage (13.1) intercalé.

9. Levier de commande selon au moins l'une des revendications 1 à 8, **caractérisé par le fait que** la barre de commande (1) est associée de manière amovible à l'élément de commande (7).

10. Levier de commande selon la revendication 9, **caractérisé par le fait qu'**un mouvement de rotation de la barre de commande (1) peut être transmis à l'élément d'entraînement (12.2) et/ou à l'élément d'engrenage (13.2) ou qu'un mouvement de rotation actif activable et réglable de l'élément d'engrenage (13.2) et/ou de l'élément d'entraînement (12.2) peut être transmis à la barre de commande (1).

11. Levier de commande selon la revendication 3 ou 10, **caractérisé par le fait que** l'élément d'entraînement (12.2) et/ou l'élément d'engrenage (13.2) sont reliés à l'élément de commande (7) et peuvent être déplacés linéairement à travers une ouverture (6) ou un évidement dans l'élément de retenue (5) en déplaçant de manière linéaire l'élément de commande (7) par rapport à l'élément de retenue (5).

12. Levier de commande selon au moins l'une des revendications 1 à 11, **caractérisé par le fait qu'**à la barre de commande (1) et/ou à un élément de saisie (2) est associé au moins un capteur de force et/ou de couple (14).

13. Levier de commande selon au moins l'une des revendications 9 à 12, **caractérisé par le fait que** les éléments d'entraînement (12.1, 12.2) sont actionnables activement et/ou passivement, éventuellement également actionnables pour déterminer la position et l'emplacement de la barre de commande (1).

14. Levier de commande selon au moins l'une des revendications 9 à 13, **caractérisé par le fait qu'**à chaque élément d'entraînement (12,1, 12.2) et/ou élément d'engrenage (13.1, 13.2) est associé au moins un système de mesure de trajet (15) qui convertit un mouvement mécanique en signaux évaluables.

15. Levier de commande selon au moins l'une des revendications 6 à 14, **caractérisé par le fait que** l'élément de broche (10) peut être déplacé manuellement au-dessus de la plaque de base (3), entraîné de manière non auto-inhibante et sans jeu à l'aide de la plaque de base (3) et/ou d'au moins un élément d'entraînement (12.1).
